Europäisches Patentamt

(19) European Patent Office

Office européen des brevets

(11) Publication number: **0 071 219 B2**

(12) # NEW EUROPEAN PATENT SPECIFICATION

(45) Date of publication of the new patent specification : **19.06.91 Bulletin 91/25**

(51) Int. Cl.⁵: **D21H 23/00, D21H 13/00**

(21) Application number : **82106696.6**

(22) Date of filing : **23.07.82**

(54) **Aqueous method of making reinforced composite material from latex, solid polymer and reinforcing material.**

The file contains technical information submitted after the application was filed and not included in this specification

(30) Priority : **27.07.81 US 286793**

(43) Date of publication of application : **09.02.83 Bulletin 83/06**

(45) Publication of the grant of the patent : **17.09.86 Bulletin 86/38**

(45) Mention of the opposition decision : **19.06.91 Bulletin 91/25**

(84) Designated Contracting States : **BE DE FR GB IT NL SE**

(56) References cited :
**EP-A- 0 039 292
WO-A-81/00268
GB-A- 1 263 812
US-A- 4 187 142
"The Development of Non-woven Fabrics for Structural and Non-structural Composite Applications" by D.G. Wagle, C.S. Beshore and J. R. Quick, (International Paper Company**

(73) Proprietor : **THE DOW CHEMICAL COMPANY 2030 Dow Center Abbott Road P.O. Box 1967 Midland Michigan 48640-1967 (US)**

(72) Inventor : **Wessling, Ritchie, Antone 5007 Nurmi Drive Midland Michigan (US)**
Inventor : **Yats, Larry Deane 2840 Franklin Clare Michigan (US)**
Inventor : **Tolbert, Darryl Kenneth 8521-D East 67th St. SO Tulsa, OK 74133 (US)**

(74) Representative : **Weickmann, Heinrich, Dipl.-Ing. et al Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820 W-8000 München 86 (DE)**

Jouve, 18, rue Saint-Denis, 75001 PARIS

EP 0 071 219 B2

## Description

This invention pertains to a process for making a composite capable of being heat-fused into a reinforced polymer sheet which comprises forming a dilute aqueous slurry of solid heat-fusible organic polymer particles, reinforcing material and a latex binder, flocculating the slurry, collecting the solids in the form of a mat, dewatering and drying and a water-laid composite sheet.

Reinforced plastics are normally prepared using energy intensive methods such as extrusion and melt mixing. While intimate polymer-fiber association is achieved, the reinforcing fibers often are broken leading to reduced physical properties. Drying blending maintains fiber integrity but an intimate polymer-fiber association is not achieved also resulting in reduced physical properties.

From WO-A-81/00268 a process is known for preparing a thermoplastic sheet reinforced with cellulose fibers wherein a thermoplastic powder and cellulose fibers are used in association. According to the description of this literature it had to be expected that by replacing a part of the cellulose fibers by other fibers a non-uniform distribution would result, if they are laid-down from dilute aqueous slurry. Surprisingly, however, particularly uniform distribution results according to the process of the invention.

In ordinary paper making, a dilute aqueous fiber slurry, usually cellulosic, is processed usually in a Fourdrinier machine or a cylinder machine. In the Fourdrinier, the dilute aqueous fiber dispersion is flowed onto a moving wire screen and water drains from the slurry usually assisted by suction. The resulting wet water-laid mat is removed from the wire, dried and wound onto reels. In the cylinder machine, the wet sheet is formed by a series of cylinders covered with a fine wire screen and revolving in a vat containing the dilute aqueous slurry of fibers. The fibers are deposited on the wire and then picked up by a single felt pressed against the top of each cylinder so that the resulting wet sheet consists of several plies. Thereafter, the process is similar to that with the Fourdrinier.

The invention also provides reinforced polymer composites comprising a solid heat fusible polymer in particulate form, a reinforcing material and the solids of a bound charge latex binder. When prepared by the process of this invention, these composites exhibit a uniform mix of fiber, powder and binder having good physical properties, particularly good wet strength in sheet form. They can be fabricated by conventional methods such as compression molding, continuous double belt thermal press, stamping and scrapless forming processes. Molded products made from these composites have similar or better water resistance compared to molded products from composites made by nonaqueous methods. Further, molded products made from these composites by a scrapless forming process have a very uniform distribution of the reinforcing material.

The process of this invention requires (1) an aqueous medium, (2) a latex binder which contains either anionic or cationic bound charges, (3) a heat fusible organic polymer which is in the form of a powder or a dispersion, (4) a reinforcement material and (5) a flocculant.

In the process, a dilute aqueous slurry is prepared containing the binder, the heat fusible organic polymer and the reinforcement material, the resulting mixture is flocculated during agitation with a polymeric flocculant opposite in charge to that of the latex binder, the resulting product is uniformly distributed onto a porous support and is allowed to drain to form a wet water-laid mat, the wet mat optionally is passed through press rolls and then is dried such as by passing the wet mat through a series of heated drier rolls to obtain a dried mat which optionally is rolled onto a cylinder or collected as a flat sheetstock. The dried mat may then be further processed, for example, by the compression molding into finished articles.

The latexes required as binders for the practice of this invention are aqueous colloidal dispersions of substantially water-insoluble organic polymers having anionic or cationic bound charges in an amount sufficient to provide stabilization of the colloid, but insufficient to cause the polymer to be water-soluble. Such an amount will usually be from about 0.04 to about 0.60 milliequivalent per gram of polymer.

The term "bound" with respect to ionic groups or charges, refers to ionic groups or charges which are bound to the polymer and not desorbable from the polymer by dialysis against deionized water.

By "available" charge is meant the amount of charge an ionizable group would provide to a polymer when fully ionized.

By the term "pH independent groups" as applied to ionic groups is meant that the groups are predominantly in ionized form over a wide range of pH, e.g., 2-12. Representative of such groups are sulfonium, sulfoxonium, isothiouronium, pyridinium, quaternary ammonium groups, sulfate and sulfonate groups.

The essentially water-insoluble organic polymers have a backbone which may be natural or synthetic and may be a homopolymer or a copolymer of two or more ethylenically unsaturated monomers or be derived from such homopolymers or copolymers. Representative organic polymers are natural rubber, synthetic rubbers such as styrene/butadiene rubbers, isoprene rubbers, butyl rubbers and other rubbery or resinous polymers of unsaturated monomers which are film-forming, preferably at room temperature or below, although in a particular instance a polymer may be used which is film-forming at the temperature of processing. Non-film-forming polym-

2

ers may be used in blends providing the resulting blend is film-forming. Polymers which are made film-forming by the use of plasticizers may be used. Polymers which are readily available in latex form are preferred, especially hydrophobic polymers which are prepared by emulsion polymerization of one or more ethylenically unsaturated monomers. When in latex form, such polymers advantageously have a particle size of from 50 to 500 nm (500 to 5000 Å) and preferably have a particle size of from 80 to 300 nm (800 to 3000 Å) as measured by electron microscopy.

Among latexes which can be used in the present invention are those described in Gibbs et al. U.S. Patent No. 4,056,501. The latexes of Gibbs et al. are cationic structured particle latexes consisting of a water-insoluble, nonionic, organic polymer core encapsulated with a thin layer of a copolymer having chemically-bound pH independent cationic groups wherein the bound cationic charges are at or near the outer surface of the particles. Anionic latexes which may be employed are well known in the art and include such products as carboxylated styrene-butadiene latexes and acrylic latexes which are prepared by emulsion polymerization. Preferred latexes are those which when cast into films and dried have a relatively low water adsorption, and a relatively high wet tensile strength. These preferred latexes have a 24 hour water adsorption value of desirably less than 20, more desirably less than 18, preferably less than 16, and more preferably less than 14 percent as measured by ASTM D-570-63.

The binder is generally employed in an amount sufficient to provide from about 1 to about 10 weight percent by weight, solids basis, of the composite.

The invention also requires a normally solid, heat fusible organic polymer. By "heat fusible" is meant that the polymer particles are capable of deformation under heat to join into an unitary structure. The heat fusible polymers may be either thermoplastic or thermoset resins. The heat fusible organic polymer component of the present invention is desirably a hydrophobic, water-insoluble addition polymer. These polymers may be in the form of a powder or a dispersion. Suitable heat fusible organic polymers include addition and condensation polymers such as, for example, polyethylene ; ultra high molecular weight polyethylene ; chlorinated polyethylene : polycarbonates ; bipolymers of ethylene and acrylic acid ; polypropylene ; nylons ; phenylene oxide resins ; phenylene sulfide resins ; polyoxymethylenes ; polyesters ; terpolymers of acrylonitrile, butadiene and styrene ; polyvinylchloride ; bipolymers of a major proportion of vinylidene chloride and a minor proportion of at least one other $\alpha,\beta$-ethylenically unsaturated monomer copolymerizable therewith ; and styrene homopolymers or copolymers. The polymer powders generally and advantageously have a particle size in the range of 1 to 400 nm. The polymers are generally employed in an amount of from 19 to 79 percent by weight of the solids, dry weight basis. A particularly preferred organic polymer is a polyolefin powder in its as-polymerized state when such polymer has been prepared by the process of Bradley et al. U.S. Patent No. 4,323,531. Of course, blends of polymers may be used.

The reinforcement material includes both organic and inorganic products such as graphite, metal fibers, aromatic polyamides, cellulose and polyolefin fibers, but preferably and advantageously comprises glass fibers such as chopped glass strands having a length of about 3.2 to 25.4 mm (1/8 to 1 inch) or milled glass fibers which generally have a length of about 0.79 to 3.2 mm (1/32 to 1/8 inch). The glass fibers are advantageously heat cleaned and, to improve impact properties, such fibers may be compatibilized by having a thin coating of, for example, a polyolefin resin or starch thereon. The reinforcing material generally comprises 10 to 80 weight percent of the composite, and can optionally include up to 10 weight percent of cellulose pulp.

As the flocculant (sometimes referred to as a coagulant), any substance capable of destabilizing the latex dispersion may be used. Examples of suitable flocculants include partially hydrolyzed polyacrylamide for cationic systems, and modified cationic polyacrylamide and diallyldiethylammonium chloride for anionic systems.

The composites of the invention may also, optionally, contain a variety of other ingredients. Minor amounts, for example, 10-33 percent by weight, of fillers such as silicon dioxide (Novacite). $CaCO_3$, MgO, $CaSiO_3$ (wollastonite) and mica may be incorporated in the composites of this invention, if desired. Pigments or dyes may be added to impart opacity and/or color. Various chemical additives such as antioxidants, UV stabilizers, thickeners, foaming agents, anti-foaming agents, bacteriocides, etc., may also be used.

The composites are formed by blending the latex, the heat fusible polymer, the reinforcing material, and preferably, additional water, then adding the flocculant, dewatering and drying the composite sheet.

This method is conveniently and preferably carried out by first stirring the reinforcing material in water until it is uniformly dispersed. The latex is then slowly added, followed by the gradual addition of the heat fusible polymer, all additions occurring with stirring. Once all ingredients are uniformly dispersed, the flocculant is added in an amount sufficient to bring the system near the isoelectric point. This slurry of water, latex, heat fusible polymer, reinforcing material and flocculant generally has desirably 0.01 to 5, preferably 0.02 to 0.5 percent solids by weight.

After the flocculation is completed (usually less than one minute), the aqueous slurry is formed into a sheet or web and dewatered. This sheet forming and dewatering process may be accomplished by any conventional papermaking apparatus such as a sheet mold or Fourdrinier or cylinder machine.

After the composite is formed into a dewatered sheet, it may be desirable to densify the sheet by pressing it with a flat press or by sending it through calendering rolls. Densification after drying of the composite is particularly useful for increasing the tensile and tear strength of the composites. Drying of the sheet may be either air drying at ambient conditions or oven drying.

The invention is further illustrated, by the following examples wherein all parts and percentages are by weight unless otherwise specified.

Example 1

Reinforced polymer composites are prepared by forming a dilute aqueous dispersion, having 0.5 weight percent solids, by adding the desired amount of reinforcing material to rapidly stirred water and then with continued agitation the desired amount of latex and incrementally the desired heat fusible polymer. Before use, the latex polymers of Sample Nos. 1-1 through 1-6 are postreacted with dimethyl sulfide, as described in Gibbs et al. U.S. Patent 4,056,501, to provide the desired amount of bound sulfonium charge. When all solids are essentially uniformly dispersed, the flocculant (coagulant) is added in an amount sufficient to bring the system to near the isoelectric point which, in the following examples, is about 0.25 weight percent, with continued agitation. Partially hydrolyzed polyacrylamide is used to flocculate the cationic systems and a modified cationic polyacrylamide is used to flocculate the anionic systems. After flocculation is completed (less than one minute), the aqueous slurry is poured into a sheet mold, air agitated for about 10 seconds, dewatered, wet pressed on blotting paper under about 69 kPa (10 psi) pressure and then oven-dried at 100°C, for about 3 hours. The composites are then compression molded in a steam heated press at 180°C and 30 tons ram pressure and tested for physical properties. Unless otherwise noted, the reinforcing material is 3.2 mm (1/4 inch) chopped strand heat cleaned glass fibers, the polymer is high density polyethylene (melt index of 0.3 g/10 seconds) and the weight ratio of solids in the composite is 33/7/60-glass/latex/polymer.

The results are as shown in Table I and Table II and demonstrate the physical properties of composites of the invention.

TABLE I
Cationic latex composites

| Sample | 1—1 | 1—2 | 1—3 | 1—4 | 1—5 | 1—6 |
|---|---|---|---|---|---|---|
| Latex | 55-S/35-<br>-B/10-BVC | 55-S/35-<br>-B/10-VBC | [1]55-S/35-<br>-B/10-VBC | 44-S/45-<br>-B/11-VBC | 90-S/20-<br>-VBC | 30-MMA/60-<br>-BA/10-VBC |
| [2]Charge (meq/g) | 0.27 | 0.19 | 0.19 | 0.32 | 0.55 | 0.26 |
| Tg°C | —— | +7 | +7 | −7 | —— | —— |
| Particle size (nm) | 145 | 143 | 143 | 130 | 110 | 251 |
| Composite prop.<br>$E_T$ (kPA) | $51.7 \times 10^5$ | $44.8 \times 10^5$ | $55.2 \times 10^5$ | $43.4 \times 10^5$ | $48.3 \times 10^5$ | $42.8 \times 10^5$ |
| $S_T$ (kPA) | $44.1 \times 10^3$ | $35.9 \times 10^3$ | $94.5 \times 10^3$ | $33.8 \times 10^3$ | $37.9 \times 10^3$ | $15.2 \times 10^3$ |
| %E | 1.2 | 1.4 | 2.1 | 1.1 | 1.0 | 12.4 |
| HDT (°C) | 125° | 131° | 132° | 122° | 123° | 102° |
| Notched izod (J/m) | 85 | 80 | 350 | 80 | 150 | 140 |
| $E_F$ (kPa) | $31.7 \times 10^5$ | $31.0 \times 10^5$ | $37.9 \times 10^5$ | $36.5 \times 10^5$ | —— | $31.1 \times 10^5$ |
| $S_F$ (kPa) | $56.5 \times 10^3$ | $52.4 \times 10^3$ | $125.5 \times 10^3$ | $64.1 \times 10^3$ | —— | $29.6 \times 10^3$ |

Notes:
[1]Compatibilized glass fibers were employed.
[2]Charge measured by dialysis through cellulose triacetate membrane (A. D. Thomas) against deionized water.
——=Not measured
S=Styrene
B=Butadiene
VBC=Vinylbenzylchloride
MMA=Methylmethacrylate
BA=Butylacrylate
$E_T$=Tensile Modulus
$S_T$=Tensile Strength
E=Elongation
HDT=Heat Deflection Temperature (at 1820 kPa)
$E_F$=Flexural Modulus
$S_F$=Flexural Strength

## TABLE II
### Anionic latex composites

| Sample | 2—1 | 2—2 | 2—3 | 2—4 | 2—6 |
|---|---|---|---|---|---|
| Latex | 62.55-S/33.2-<br>-B/2.5-HEA/1.8-IA | 50-S/47-B/3-IA | [1]62.55-S/33.2-<br>-B/2.5-HEA/1.8-IA | [2]62.55-S/33.2-<br>-B/2.5-HEA/1.8-IA | [4]62.55-S/33.2-<br>-B/2.5-HEA/1.8-IA |
| Charge (meq/g) | 0.28 | 0.43 | 0.28 | 0.28 | 0.28 |
| $Tg°C$ | +8 | —— | +8 | +8 | +8 |
| Particle size (nm) | 169 | 159 | 169 | 169 | 169 |
| Composite prop.<br>$E_T$ (kPa) | $43.4 \times 10^5$ | $40.7 \times 10^5$ | $71.7 \times 10^5$ | $66.2 \times 10^5$ | $59.3 \times 10^5$ |
| $S_T$ (kPa) | $41.4 \times 10^3$ | $20.7 \times 10^3$ | $101.4 \times 10^3$ | $75.8 \times 10^3$ | $90.3 \times 10^3$ |
| %E | 1.4 | 4.1 | 2.0 | 1.7 | 2.1 |
| HDT (°C) | $123^u$ | $115^u$ | $131^u$ | $122^u$ | $131^u$ |
| Notched izod<br>impact (J/m) | 105 | 105 | 415 | 250 | 295 |
| $E_F$ (kPa) | $39.3 \times 10^5$ | $27.6 \times 10^5$ | $46.9 \times 10^5$ | $40.7 \times 10^5$ | $36.5 \times 10^5$ |
| $S_F$ (kPa) | $70.3 \times 10^3$ | $35.9 \times 10^3$ | $131.0 \times 10^3$ | $95.2 \times 10^3$ | $103.4 \times 10^3$ |

Notes:
[1]Compatibilized glass fibers were used.
[2]Starch sized glass fibers were used.
[4]Fiber was 28% compatibilized glass fibers and 5% milled glass.
—— = Not measured.
HEA = Hydroxyethylacrylate
IA = Itaconic acid

## Example 2

23.1 g of 4.8 mm (3/16 inch) chopped strand glass fibers (415BB, available from Owens Corning Fiberglas. Toledo, OH, USA) are added to a vessel containing 7 liters thickened water (Gardner viscosity of about 50 cps), and stirred under high shear for about 15 minutes. Continuing the stirring, 42 g of a high density polyethylene, low bulk density powder made generally according to the teachings of Bradley et al. U.S. Patent No. 4,323,531 and 4.9 g (solids) of a latex (54/45/1 weight parts styrene/butadiene/fumaric acid) are added to the fiberglass dispersion and the mixture is stirred another 2 minutes. Then 30 g (total) of a 0.5 percent aqueous solution of a copolymer of acrylamide and dimethyl-amino-ethyl-methacrylate having a medium molecular weight as flocculant (Betz® 1260) available from Betz Laboratories, Trevose, PA, USA is diluted to 0.2 percent solids and added slowly (over about 30 to 60 seconds) to the slurry, and the slurry is then stirred for about 1 minute. The slurry (now about 1 percent solids) is poured into a Williams Sheet mold (about 203 mm × 203 mm ; 8 in. × 8 in.) containing 7 liters of water, mildly agitated, and dewatered. The solids are collected on an 177 μm screen, wet pressed, and dried in a forced air oven at 105°C for 90 minutes.

The above procedure is repeated, this time placing about 3 percent of the polyethylene powder into the water when the glass fibers are added.

## Example 3

The composite sheet produced in Example 2 is pressed by a steam-heated press to form a durable, molded container. The container is strong, impact resistant, and water-resistant.

## Example 4

Two samples of anionic latex suitable for use in the invention are measured to determine the total charge of the latex. Identical samples are dialyzed against deionized water and measured to determine the remaining charge (bound charge). The results are shown in Table III.

## Example 5

Samples of the undialyzed latexes of Example 4 and one other latex are cast into films, dried, and placed into deionized water at 23°C. The quantity of water absorbed after 24 hours is measured in accordance with ASTM D-570-63 and a water absorption value is calculated as the percent increase in weight of the films. These results are reported in Table III and show that latexes best suited for use in the invention have low water absorption values.

### TABLE III

| Sample | 3—1 | 3—2 | 3—3 |
|---|---|---|---|
| Polymer composition[1] | 65.55-S/33.2-B/2.5-HEA/1.8-IA | 54.0-S/45.0-B/1.0-FA | 87-EA/10-S/3-AA |
| Total charge (meq/g) | 0.29 | 0.21 | —[2] |
| Bound charge (meq/g) | 0.26 | 0.15 | —[2] |
| Undialyzed water Absorption (% after 24 hrs) | 13.1 | 13.1 | 20.0 |

Notes:
  [1]S=Styrene
  B=Butadiene
  HEA=2-Hydroxyethyl acrylate
  IA=Itaconic Acid
  FA=Fumaric Acid
  EA=Ethyl Acrylate
  AA=Acrylic Acid
  [2]Not measured

Example 6

Several layers of the composite sheet of Example 2 are pressed in a steam heated press to form a hard, flat plate. The plate is placed into water at 23°C. The quantity of water absorbed after 24 hours is measured in accordance with ASTM D-570-63 and the water absorption value, calculated as the percent increase in the weight of the molded composite, is 0.035 percent. For comparative purposes, a molded plate sold under the trade name of Azdel (PPG Industries, Pittsburg, PA, USA), which is a glass reinforced polypropylene made by a nonaqueous lamination process, is similarly treated. Its water absorption value is 0.094 percent.

Example 7

Samples of the flat plates of Example 6 are molded into pie pan shaped containers using a scrapless forming process. The containers are then placed into an oven where the organic material is burnt away. An examination of the glass reinforcing material shows that the reinforcing material in the containers made according to the invention is uniformly distributed within the molded article, but the reinforcing material in the containers made with the Azdel polypropylene composite is not uniformly distributed, particularly around the outer edges of the container.

**Claims**

1. Process for making a composite capable of being heat-fused into a reinforced polymer sheet, which comprises forming a dilute aqueous slurry of solid heat-fusible organic polymer particles, a reinforcing material and a latex binder, flocculating this slurry, collecting the solids in the form of a mat, dewatering and drying characterized by

A. using as slurry a dilute aqueous slurry of (1) from 19 to 79% of solid heat-fusible organic polymer particles (2), from 10 to 80% of a reinforcing material including, optionally, up to 10% cellulose pulp and (3) from 1 to 10% of a latex binder of a substantially water-insoluble organic polymer having either anionic or cationic bound charges, the percentages being by weight based on a dry solids basis and

B. flocculating the slurry during agitation with a polymeric flocculant opposite in charge to that of the latex binder.

2. The process of claim 1 wherein the dilute aqueous slurry comprises from 0,02 to 0,5 percent by weight solids.

3. The process of Claim 1 wherein the solid fusible organic polymer is polyethylene, ultra high molecular weight polyethylene, chlorinated polyethylene, a bipolymer of ethylene and acrylic acid, polypropylene, a terpolymer of acrylonitrile, butadiene and styrene, polyvinylchloride, a bipolymer of a major proportion of vinylidene chloride and a minor proportion of at least one other $\alpha,\beta$-ethylenically unsaturated monomer copolymerizable therewith, or a styrene polymer.

4. The process of Claim 1 wherein the reinforcing material comprises glass fibers.

5. The process of Claim 1 wherein the latex is a bound charge anionic latex.

6. The process of Claim 1 wherein the latex is an anionic styrene-butadiene latex containing copolymerized $\alpha,\beta$-ethylenically unsaturated carboxylic acid.

7. The process of Claim 1 wherein the latex is a bound charge cationic latex.

8. The process of Claim 1 wherein the dried water-laid mat is heat fused into a reinforced plastic.

9. A water-laid composite sheet in the form of a dried mat comprising a solid heat-fusible polymer in particulate form, a reinforcing material and a latex binder which composite is capable of being heat-fused into a reinforced polymer sheet characterized in that it comprises

A. from 19 to 79 percent by weight of a solid heat-fusible polymer in particulate form,

B. from 10 to 80 percent by weight of a reinforcing material including, optionally, up to 10 percent by weight of cellulose pulp, and

C. from 1 to 10 percent by weight of the solids of a substantially water-insoluble organic polymer latex having either anionic or cationic bound charges brought to near the isoelectric point by polymeric flocculant opposite in charge to that of the latex.

10. The composite sheet of Claim 9 containing from 19 to 79 weight percent polyethylene powder, from 20 to 80 weight percent of reinforcing material, and from 1 to 10 weight percent of the solids of a bound charge latex binder.

11. The composite sheet of Claim 9 wherein the binder comprises a polymer of styrene, butadiene and an $\alpha,\beta$-ethylenically unsaturated carboxylic acid.

8

## Ansprüche

1. Verfahren zur Herstellung einer Zusammensetzung, die in ein verstärktes polymeres Bahnmaterial warmverschweißt werden kann, durch Bildung einer verdünnten wässrigen Aufschlemmung von festen warmverscheißbaren organischen polymeren Teilchen, einem Verstärkungsmaterial und einem Latexbinder, Ausflocken dieser Aufschlemmung, Sammeln der Feststoffe in Form einer Matte, Entwässern und Trocknen, dadurch **gekennzeichnet**, daß man

A) als Aufschlemmung eine verdünnte wässrige Aufschlemmung von (1) 19 bis 79% von festen warmverschweißbaren organischen Polymerteilchen verwendet, (2) 10 bis 80% eines Verstärkungsmaterials, das gegebenenfalls bis zu 10% Cellulosepulpe enthält, und (3) 1 bis 10% eines Latexbinders eines im wesentlichen wasserunlöslichen organischen Polymers mit entweder anionischen oder kationischen gebundenen Ladungen, wobei die Prozentzahlen Gewichtsprozent, bezogen auf die trockenen Feststoffe, bedeuten, und

B) die Aufschlemmung unter Agitation mit einem polymeren Flockungsmittel mit einer gegenüber dem Latexbinder entgegengesetzten Ladung ausflockt.

2. Verfahren nach Anspruch 1, dadurch **gekennzeichnet**, daß die verdünnte wässrige Aufschlemmung 0,02 bis 0,5 Gew.% Feststoffe enthält.

3. Verfahren nach Anspruch 1, dadurch **gekennzeichnet**, daß das feste schmelzbare organische polymere Polyethylen, Polyethylen mit ultrahohem Molekulargewicht, chloriertes Polyethylen, ein Bipolymer von Ethylen und Acrylsäure, Polypropylen, ein Terpolymer von Acrylnitril, Butadien und Styrol, Polyvinylchlorid, ein Bipolymeres mit einem größeren Anteil an Vinylidenchlorid und einem kleineren Anteil von mindestens einem anderen $\alpha,\beta$-ethylenisch ungesättigten Monomeren, das damit copolymerisierbar ist, oder ein Styrolpolymer ist.

4. Verfahren nach Anspruch 1, dadurch **gekennzeichnet**, daß das Verstärkungsmaterial Glasfasern umfaßt.

5. Verfahren nach Anspruch 1, dadurch **gekennzeichnet**, daß der Latex ein Ltex mit einer gebundenen anionischen Ladung ist.

6. Verfahren nach Anspruch 1, dadurch **gekennzeichnet**, daß der Latex ein anionischer Styrol-Butadien-Latex ist, der copolymerisierte $\alpha,\beta$-ethylenisch ungesättigte Carbonsäure enthält.

7. Verfahren nach Anspruch 1, dadurch **gekennzeichnet**, daß der Latex ein Latex mit einer gebundenen kationischen Ladung ist.

8. Verfahren nach Anspruch 1, dadurch **gekennzeichnet**, daß die getrocknete wasserbeschichtete Matte zu einem verstärkten Kunststoff warmverschweißt wird.

9. Wassergeschichtetes zusammengesetztes Bahnmaterial in Form einer getrockneten Matte, enthaltend ein festes warmverschweißbares Polymer in Teilchenform, ein Verstärkungsmaterial und einen Latexbinder, wobei die Zusammensetzung in ein verstärktes polymeres Bahnmaterial wärmeverschweißt werden kann, dadurch gekennzeichnet, daß es enthält :

A) 19 bis 79 Gew.% eines festen warmverschweißbaren Polymers in Teilchenform,

B) 10 bis 80 Gew.% eines Verstärkungsmaterials, das gegebenenfalls bis zu 10 Gew.% Cellulosepulpe enthält,

C) 1 bis 10 Gew.% der Feststoffe eines im wesentlichen wasserunlöslichen organischen polymeren Latex, der entweder anionische oder kationische gebundene Ladungen besitzt, durch polymere Ausflockungsmittel mit einer zum Latex entgegengesetzten Ladung in die Nähe des isoelektrischen Punktes gebracht.

10. Zusammengesetztes Bahnmaterial nach Anspruch 9, dadurch **gekennzeichnet**, daß es 19 bis 79 Gew.% Polyethylenpulver, 20 bis 80 Gew.% eines Verstärkungsmaterials, und 1 bis 10 Gew.% der Feststoffe eines Latexbinders mit gebundener Ladung enthält.

11. Zusammengesetztes Bahnmaterial nach Anspruch 9, dadurch **gekennzeichnet**, daß der Binder ein Polymeres aus Styrol, Butadien und einer $\alpha,\beta$-ethylenisch ungesättigten Carbonsäure umfaßt.


## Revendications

1. Procédé de préparation d'un composite capable d'être thermofondu en une feuille de polymère renforcée, qui consiste à former une suspension aqueuse diluée de particules solides de polymère organique thermofusible, d'un matériau de renforcement et d'un liant au latex, à floculer cette suspension, à recueillir les matières solides sous la forme d'un mat, à déshydrater et à sécher, caractérisé en ce que

A. on utilise comme suspension une suspension aqueuse diluée de (1) de 19 à 79% de particules solides de polymère organique thermofusible, (2) de 10 à 80% d'un matériau de renforcement comprenant, de manière facultative, jusqu'à 10% de pâte de cellulose et (3) de 1 à 10% d'un liant au latex, d'un polymère organique sensiblement insoluble dans l'eau ayant des charges liées, soit anioniques, soit cationiques, les pourcentages étant en poids ramenés à une base de matières solides sèches et

B. on flocule la suspension au cours d'une agitation avec un floculant polymère de charge opposée à celle du liant au latex.

2. Procédé de la revendication 1, dans lequel la suspension aqueuse diluéé comprend de 0,02 à 0,5% en poids de matières solides.

3. Procédé de la revendication 1, dans lequel le polymère organique fusible solide est un polyéthylène, un polyéthylène à poids moléculaire ultra-élevé, un polyéthylène chloré, un bipolymère d'éthylène et d'acide acrylique, un polypropylène ; un terpolymère d'acrylonitrile, de butadiène et de styrène, un chlorure de polyvinyle, un bipolymère d'une proportion majeure de chlorure de vinylidène et d'une proportion mineure d'au moins un autre monomère éthyléniquement insaturé en $\alpha,\beta$ copolymérisable avec celui-ci, ou un polymère de styrène.

4. Procédé de la revendication 1, dans lequel le matériau de renforcement comprend des fibres de verre.

5. Procédé de la revendication 1, dans lequel le latex est un latex à charges liées anioniques.

6. Procédé de la revendication 1, dans lequel le latex est un latex styrène-butadiène anionique contenant un acide carboxylique éthyléniquement non saturé en $\alpha,\beta$ copolymérisé.

7. Procédé de la revendication 1, dans lequel le latex est un latex à charges liées cationiques.

8. Procédé de la revendication 1, dans lequel le mat couché à l'eau et séché est fondu à la chaleur en un plastique renforcé.

9. Feuille composite couchée à l'eau, se présentant sous la forme d'un mat séché, comprenant un polymère thermofusible solide sous forme particulaire, un matériau de renforcement et un liant au latex, lequel composite est susceptible d'être thermofondu en une feuille de polymère renforcée, caractérisée en ce qu'elle comprend

A. de 19 à 79% en poids d'un polymère thermofusible solide sous forme particulaire,

B. de 10 à 80% en poids d'un matériau de renforcement comprenant, de manière facultative, jusqu'à 10% en poids de pâte de cellulose, et

C. de 1 à 10% en poids de matières solides d'un latex formé d'un polymère organique sensiblement insoluble dans l'eau ayant des charges liées, soit anioniques, soit cationiques, amenées au voisinage du point isoélectrique par un floculant polymère de charge opposée à celle du latex.

10. Feuille composite de la revendication 9, contenant de 19 à 79% en poids de poudre de polyéthylène, de 20 à 80% en poids de matériau de renforcement et de 1 à 10% en poids de matières solides d'un liant au latex à charges liées.

11. Feuille composite de la revendication 9, dans laquelle le liant comprend un polymère de styrène de butadiène et d'un acide carboxylique éthyléniquement insaturé en $\alpha,\beta$.